# EUROPÄISCHE PATENTSCHRIFT

(11) **EP 2 713 120 B1**
(45) Veröffentlichungstag und Bekanntmachung des Hinweises auf die Patenterteilung: **19.08.2020**
(21) Anmeldenummer: 13184429.2
(22) Anmeldetag: 13.09.2013
(51) Int. Cl.: F25D 11/00

(54) **Thermischer Speicher für begehbare Kühlräume**
Thermal storage device for walk-in cold rooms
Accumulateur thermique pour chambre de refroidissement accessibles

(30) Priorität: 27.09.2012 DE 202012103716 U
(43) Veröffentlichungstag der Anmeldung: 02.04.2014
(73) Patentinhaber: Viessmann Kühlsysteme GmbH, 95030 Hof (DE)
(72) Erfinder: Gebelein, Bernd, 95179 Geroldsgrün (DE); Römer, Dr. Ing., Siegfried, 01477 Arnsdorf (DE)
(74) Vertreter: Pröll, Jürgen

(56) Entgegenhaltungen:
- GB-A- 2 459 955
- JP-A- 2005 326 078
- JP-A- 2012 007 796
- US-A1- 2012 227 926

## Beschreibung

Die vorliegende Erfindung betrifft einen thermischen Speicher für einen begehbaren Kühlraum mit einer Vielzahl von Speicherzellen.

Aus dem Stand der Technik sind verschiedene Einrichtungen mit einem Kältespeicher bekannt, wodurch ein Kühl- oder Kältemittel gekühlt wird oder ein Raum die Kälte über einen bestimmten Zeitraum speichern kann.

Ferner sind auch Einrichtungen bekannt, bei welchen in Abhängigkeit der gewünschten Temperatur die Menge des Kälte- oder Kühlmittels, welches zu einem Verdampfer geleitet wird, eingestellt wird. Bei diesen Einrichtungen erfolgt daher das Kühlen eines Innenraums einer Einrichtung durch Aktivieren von entsprechenden Kühlvorrichtungen (Kältemaschine, Verdampfer) und deren Deaktivierung. Solche Einrichtungen sind beispielsweise aus dem Stand der Technik durch Kühlschränke bekannt.

DE 10 2007 004 809 A1 offenbart ein Fahrzeuginnenraumkühlsystem. Das Fahrzeuginnenraumkühlsystem für ein Fahrzeug mit einer Kabine und einem Motor zur Bereitstellung einer Vortriebskraft beinhaltet ein erstes Kabinenkühlsystem, das durch den Motor des Fahrzeugs angetrieben wird, mit einem ersten Kondensator und ein zweites Kabinenkühlsystem, das durch elektrische Energie angetrieben wird, mit einer Kältespeichervorrichtung und einem zweiten Kondensator, wobei der erste Kondensator und der zweite Kondensator sich in einer Luftstromlinie befinden. Das zweite Kabinenkühlsystem speist thermisch und selektiv die Kältespeichervorrichtung, wenn der Motor in Betrieb ist.

DE 695 16 431 T2 offenbart eine Vorrichtung zum Absorbieren von Wärme mit einer Kammer, in welche leicht verderbliche Erzeugnisse eingebracht werden, wobei die Wände der Kammer zu mindestens 70% und vorzugsweise zu mehr als 80% der Wandfläche aus kastenartigen, mit Zwischenräumen oder Hohlräumen versehenen Platten bestehen, deren Zwischenräume mit einer Wärmekapazitäts-Flüssigkeit gefüllt sind und in welchen Kühlsole-Leitungen verlaufen, die mit einer Kühlsole gespeist werden, wobei die Leitungen in den Plattenzwischenräumen vorgesehen sind. Die Dokumente US 2012/227926 A1 und JP 2005 326078 A offenbaren Energiespeichersysteme.

Aufgabe der vorliegenden Erfindung ist es jedoch, einen thermischen Speicher für einen begehbaren Kühlraum anzugeben, der eine alternative Lösung für einen thermischen Speicher zu denen aus dem Stand der Technik bekannten Einrichtungen bereitstellt und zudem für Räume mit einem größeren, zu kühlenden Volumen gegenüber den aus dem bekannten Stand der Technik bekannten Kühlschränken geeignet ist.

Die Aufgabe wird durch einen thermischen Speicher mit den im Anspruch 1 angegebenen Merkmalen gelöst.

Vorteilhafte Weiterbildungen der Erfindung sind in den Unteransprüchen im Detail angegeben.

Ein erfindungsgemäßer thermischer Speicher für einen begehbaren Kühlraum weist eine Vielzahl von Speicherzellen auf, in denen ein Speichermedium aufgenommen ist, wobei in den Speicherzellen eine erste Kühlleitung geführt ist, in der ein erstes Kühlmittel zum Kühlen des Speichermediums zuführbar ist, und wobei die ersten Kühlleitungen mit einer Vorrichtung zum wahlweisen Zuführen des ersten Kühlmittels zu den Speicherzellen verbunden sind. Ferner ist in den Speicherzellen eine zweite Kühlleitung aufgenommen, wobei die zweiten Kühlleitungen über eine weitere Vorrichtung mit einem Verdampfer zum Verdampfen des zweiten Kühlmittels verbunden sind. Weiterhin ist auch eine Steuerung vorgesehen, mittels derer die Speicherzellen und das darin aufgenommene Speichermedium durch Zuführen des ersten Kühlmittels über die ersten Kühlleitungen und die Vorrichtung kühlbar sind und mittels derer dem Verdampfer ein zweites Kühlmittel über die zweiten Kühlleitungen und der weiteren Vorrichtung aus mindestens einer der Speicherzellen zuführbar ist, wobei die in den Speicherzellen aufgenommenen Speichermedien unterschiedliche Umschlagstemperaturen/Phasenwechseltemperaturen aufweisen.

Bei einem derartigen thermischen Speicher können verschiedene Temperaturen in einem zu kühlenden Raum schnell und einfach eingestellt werden, da über die Vorrichtung und die weiteren Vorrichtungen aufgrund der Steuerung dem Verdampfer das zweite Kühlmittel zugeführt wird, welches der gewünschten Temperatur entspricht, wobei das zweite Kühlmittel durch das Durchströmen der jeweiligen Speicherzelle bzw. Speicherzellen auf die gewünschte Temperatur gebracht wird.

Dementsprechend wird bzw. werden über die Vorrichtung und das erste Kühlmittel die Speicherzelle bzw. die Speicherzellen gekühlt, welche nicht vollständig geladen sind. Vollständig geladen bedeutet in diesem Zusammenhang, dass das Speichermedium in den einzelnen Speicherzellen keine Wärme, beispielsweise durch einen Phasenwechsel, mehr aufnehmen kann. Bei diesem thermischen Speicher ergibt sich daher auch die Möglichkeit, dass, falls eine Speicherzelle entladen ist, über die Steuerung auf die nächstliegende Speicherzelle mit der der gewünschten Temperatur am nächsten kommenden Temperatur zugegriffen werden kann. Beispielsweise weisen die vollständig geladenen Speicherzellen jeweils ein Speichermedium auf, dessen Temperatur sich jeweils um 1K unterscheidet (beispielsweise erste Speicherzelle -25°C, zweite Speicherzelle - 24°C, dritte Speicherzelle -23°C, ... n-te Speicherzelle -10°C). Jedoch können auch andere Temperaturbereiche abgedeckt werden, beispielsweise auch bis in positive Temperaturbereiche (z. B. bis zu +10°C).

Der Speicher kann eine Vielzahl von derartigen Speicherzellen aufweisen, so dass sich eine Vielzahl von einstellbaren Temperaturen ergibt. Die Erfindung lässt sich besonders wirtschaftlich realisieren in Verbindung mit thermischen Speichern, die eine Speicherkapazität von ≥4 kWh aufweisen. Die Speicherkapazität nach oben ist nicht begrenzt. Speicher mit einer Kapazität von 50 kWh und mehr können ebenfalls zur Anwendung kommen.

Bei dem thermischen Speicher können über die ersten Kühlleitungen und das darin aufgenommene erste Kühlmittel die Speicherzellen und das Speichermedium in den Speicherzellen kontinuierlich gekühlt werden, so dass ein Entladen der jeweiligen Speicherzellen nahezu ausgeschlossen werden kann. Jedoch kann bei diesem thermischen Speicher auch ein Notlaufbetrieb erreicht werden, da die Speichermedien in den jeweiligen Speicherzellen - je nach Ausführungsform und Dimensionierung - einen Wärmeübergang zum Kühlen des zweiten Kühlmittels für einen bestimmten Zeitraum bereitstellen.

Vorteilhafterweise kann das zweite Kühlmittel auch zwei oder mehreren Speicherzellen in Reihe oder parallel zugeführt werden, so dass bestimmte Temperaturen des zweiten Kühlmittels und daher auch bestimmte Temperaturen in dem zu kühlenden Raum eingestellt werden können. Dies erfolgt über die Steuerung, welche entsprechende Ventile in der Vorrichtung bzw. der weiteren Vorrichtung und den zweiten Kühlleitungen öffnet und schließt.

Dabei kann das Speichermedium ein Phasenwechselmaterial sein, wodurch ein großer Betrag an thermischer Energie in einem bestimmten Volumen speicherbar ist.

Das Phasenwechselmaterial in den einzelnen Speicherzellen kann ein Gemisch aus Wasser und Salzen oder Alkoholen sein, deren Phasenwechseltemperatur sich durch die Gemischzusammensetzung und/oder Gemischkonzentration unterscheidet.

Die ersten Kühlleitungen können über die Vorrichtung mit einer Kältemaschine verbunden sein, die das erste Kühlmittel kühlt.

Weiterhin sind in oder an den einzelnen Speicherzellen Temperaturmesseinrichtungen angeordnet, die der Steuerung mindestens die Temperatur des Speichermediums übermitteln. Die Steuerung weiß daher, ob die Temperatur in der jeweiligen Speicherzelle über oder unter der Phasenwechseltemperatur/Umschlagstemperatur des Speichermediums liegt und kennt daher auch den Zustand der jeweiligen Speicherzelle (geladen/entladen). In Abhängigkeit dieser Information kann die Steuerung dann die Vorrichtung und die weitere Vorrichtung so steuern, dass das erste Kühlmittel nur den Speicherzellen zugeführt wird, welche entladen sind, und das zweite Kühlmittel nur durch die Speicherzellen geführt wird, welche geladen sind.

Dabei kann die Zuführung des ersten Kühlmittels in Abhängigkeit der Temperatur des Speichermediums in den Speicherzellen und die Zuführung des zweiten Kühlmittels aus den Speicherzellen in Abhängigkeit der Temperatur in dem zu kühlenden, begehbaren Raum sowie des Beladungszustandes der Speicherzellen erfolgen.

Weitere Ziele, Merkmale, Vorteile und Anwendungsmöglichkeiten ergeben sich aus der nachfolgenden Beschreibung von nicht einschränkend zu verstehenden Ausführungsbeispielen mit Bezug auf die zugehörigen Zeichnungen. Dabei bilden alle beschriebenen und/oder bildlich dargestellten Merkmale für sich oder in beliebiger Kombination den hier offenbarten Gegenstand, auch unabhängig von ihrer Gruppierung in den Ansprüchen oder deren Rückbeziehungen. Die Abmessungen und Proportionen der in den Figuren dargestellten Komponenten sind hierbei nicht unbedingt maßstäblich; sie können bei zu implementierenden Ausführungsformen vom Veranschaulichten abweichen.

In den Zeichnungen zeigt:

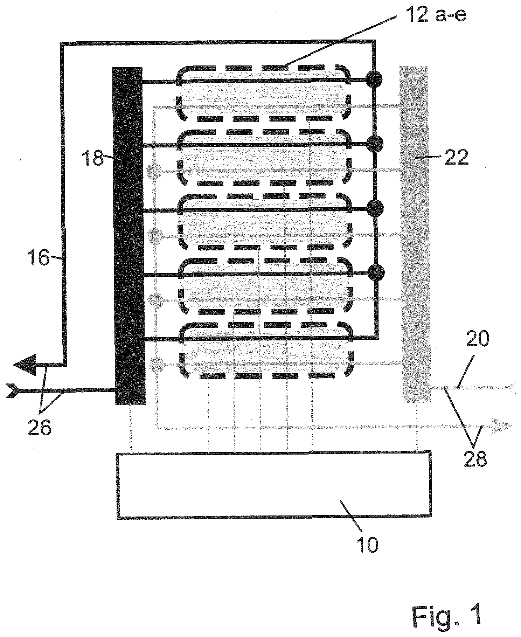

- FIG 1: eine schematische Ansicht eines thermischen Speichers.

FIG 1 zeigt eine schematische Ansicht eines thermischen Speichers mit einer Vielzahl von Speicherzellen 12a-e. In den Speicherzellen 12a-e ist jeweils ein Speichermedium aufgenommen, wobei die Speichermedien in den einzelnen Speicherzellen 12a-e unterschiedliche Umschlagstemperaturen/Phasenwechseltemperaturen aufweisen können. Die Speicherzellen 12a-e sind mit einer ersten Kühlleitung 16 verbunden, wobei in den einzelnen Speicherzellen 12a-e Teile der ersten Kühlleitung 16 geführt sind. Die erste Kühlleitung 16 ist mit einer Vorrichtung 18 verbunden, über die den einzelnen Speicherzellen 12a-e wahlweise ein erstes Kühlmittel zugeführt werden kann.

In den jeweiligen Speicherzellen 12a-e ist darüber hinaus eine zweite Kühlleitung 20 aufgenommen, welche mit einer weiteren Vorrichtung 22 in Verbindung steht, so dass über die weitere Vorrichtung 22 wahlweise ein zweites Kühlmittel den jeweiligen Speicherzellen 12a-e zugeführt werden kann. Analog zu der ersten Kühlleitung 16 ist dabei die zweite Kühlleitung 20 ausgebildet, d. h., von der weiteren Vorrichtung 22 erstrecken sich jeweils einzelne zweite Kühlleitungen in die einzelnen Speicherzellen 12a-e.

Eine Steuerung 10 steuert dabei die weitere Vorrichtung 22 und die Vorrichtung 18, so dass das erste Kühlmittel nur den Speicherzellen 12a-e zugeführt wird, welche geladen werden sollen und das zweite Kühlmittel über die weitere Vorrichtung 22 nur durch die Speicherzellen 12a-e geleitet wird, welche das zweite Kühlmittel auf die entsprechende Temperatur kühlen. Pfeil 26 zeigt dabei die Strömungsrichtung des ersten Kühlmittels und Pfeil 28 die Strömungsrichtung des zweiten Kühlmittels. Die Steuerung 10 ist ferner mit Temperaturmesseinrichtungen verbunden, die in bzw. an den jeweiligen Speicherzellen 12a-e angeordnet sind (in Fig. 1 mit gestrichelten Linien angedeutet). Über die Temperaturmesseinrichtungen kann festgestellt werden, ob das in den jeweiligen Speicherzellen 12a-e aufgenommene Speichermedium sich über oder unter der Umschlagstemperatur/Phasenwechseltemperatur befindet.

Liegt die Temperatur in einer ausgewählten Speicherzelle 12a unterhalb der Umschlagstemperatur/Phasenwechseltemperatur des darin aufgenommenen Speichermediums, so wird von der Steuerung 10 und über die Vorrichtung 18 die Zufuhr des ersten Kühlmittels zu dieser Speicherzelle 12a unterbrochen, da diese vollständig geladen ist. Anschließend kann zum Kühlen eines Raumes von der Steuerung über die weitere Vorrichtung 22 das zweite Kühlmittel über die zweite Kühlleitung 20 durch die Speicherzelle 12a geleitet werden, so dass das zweite Kühlmittel von dem in der Speicherzelle 12a aufgenommenen Speichermedium auf die entsprechende Temperatur gekühlt wird. Das zweite Kühlmittel wird dann über die zweite Kühlleitung 20 zu einem Verdampfer geleitet, in welchem das zweite Kühlmittel verdampft und dadurch eine Wärmeübertragung aus dem Raum zum Kühlen des Raumes erfolgt. Die Kühlung erfolgt dabei in Abhängigkeit der Temperatur, die das zweite Kühlmittel aufweist.

Daher kann, je nach Durchflutung der jeweiligen Speicherzelle 12a-e das zweite Kühlmittel mit verschiedenen Temperaturen beaufschlagt werden. Gerade bei großen Kühlräumen müssen oftmals verschiedene zu kühlende Güter mit verschiedenen Temperaturen gekühlt werden, wobei der Austausch der zu kühlenden Güter mitunter häufig stattfindet. Bei einem thermischen Speicher mit einer Vielzahl von Speicherzellen 12a-e kann von einer Bedienperson beispielsweise über ein Eingabegerät der Steuerung mitgeteilt werden, dass eine zu kühlende Ware aufgenommen werden soll, welche eine Kühltemperatur von -15°C benötigt. Wurde zuvor die Kühleinrichtung bei einer Temperatur von -20°C betrieben bzw. gekühlt, so kann die Steuerung das zweite Kühlmittel, welches in einem Verdampfer verdampft, anstelle durch eine Speicherzelle 12b durch eine Speicherzelle 12f leiten, um somit auch die Temperatur des zweiten Kühlmittels zu ändern. Das zweite Kühlmittel weist sodann eine andere Temperatur auf, und gibt diese an dem zu kühlenden Raum ab.

Das Kühlen der jeweiligen Speicherzellen 12a-e erfolgt über die Steuerung 10 und die Vorrichtung 18, welche den einzelnen Speicherzellen 12a-e das erste Kühlmittel zuführt. Das erste Kühlmittel wird beispielsweise auf eine bestimmte Temperatur heruntergekühlt oder kann über eine Kältemaschine auch auf unterschiedliche Temperaturen gebracht werden. Das erste Kühlmittel wird dann so lange mindestens einer Speicherzelle 12a-e zugeführt, bis die Steuerung 10 über eine Temperaturmesseinrichtung feststellt, dass die Temperatur in der jeweiligen Speicherzelle 12a-e unterhalb der Umschlagstemperatur/Phasenwechseltemperatur des darin aufgenommenen Speichermediums liegt. Liegt die Temperatur darunter, so erkennt die Steuerung 10, dass die jeweilige Speicherzelle 12a-e vollständig geladen ist. Anschließend steht diese Speicherzelle wieder zum Kühlen des zweiten Kühlmittels zur Verfügung.

### Bezugszeichenliste

- 10: Steuerung
- 12a-e: Speicherzelle
- 16: erste Kühlleitung
- 18: Vorrichtung
- 20: zweite Kühlleitung
- 22: weitere Vorrichtung
- 26: Strömungsrichtung erstes Kühlmittel
- 28: Strömungsrichtung zweites Kühlmittel

## Patentansprüche

1. Thermischer Speicher für einen begehbaren Kühlraum, aufweisend eine Vielzahl von Speicherzellen (12a-e), in denen ein Speichermedium aufgenommen ist, wobei in den Speicherzellen (12a-e) eine erste Kühlleitung (16) geführt ist, in der ein erstes Kühlmittel zum Kühlen des Speichermediums zuführbar ist, wobei die ersten Kühlleitungen (16) mit einer Vorrichtung (18) zum wahlweisen Zuführen des ersten Kühlmittels zu den Speicherzellen (12a-e) verbunden sind, und in den Speicherzellen (12a-e) eine zweite Kühlleitung (20) aufgenommen ist, wobei die zweiten Kühlleitungen (20) über eine weitere Vorrichtung (22) verbunden sind, und eine Steuerung (10) vorgesehen ist, mittels derer die Speicherzellen (12a-e) und das darin aufgenommene Speichermedium durch Zuführen des ersten Kühlmittels über die ersten Kühlleitungen (16) und die Vorrichtung (18) kühlbar sind und ein zweites Kühlmittel über die zweiten Kühlleitungen (20) und der weiteren Vorrichtung (22) aus mindestens einer der Speicherzellen (12a-e) zuführbar ist, wobei die in den Speicherzellen (12a-e) aufgenommenen Speichermedien unterschiedliche Phasenwechseltemperaturen aufweisen, wobei in oder an den einzelnen Speicherzellen (12a-e) Temperaturmesseinrichtungen angeordnet sind, die der Steuerung (10) mindestens die Temperatur des Speichermediums übermitteln.

2. Thermischer Speicher nach Anspruch 1, wobei das Speichermedium ein Phasenwechselmaterial ist.

3. Thermischer Speicher nach Anspruch 2, wobei das Phasenwechselmaterial in den einzelnen Speicherzellen (12a-e) ein Gemisch aus Wasser und Salzen oder Alkoholen ist, deren Phasenwechseltemperatur sich durch die Gemischzusammensetzung und/oder Gemischkonzentration unterscheidet.

4. Thermischer Speicher nach einem der Ansprüche 1 bis 3, wobei die erste Kühlleitung (16) über die Vorrichtung (18) mit einer Kältemaschine verbunden ist, die das erste Kühlmittel kühlt.

5. Thermischer Speicher nach Anspruch 1, wobei die Zuführung des ersten Kühlmittels in Abhängigkeit der Temperatur des Speichermediums in den Speicherzellen (12a-e) und die Zuführung des zweiten Kühlmittels aus den Speicherzellen (12a-e) in Abhängigkeit der Temperatur in dem zu kühlenden, begehbaren Raum sowie des Ladezustandes der Speicherzellen (12a-e) erfolgt.

6. Thermischer Speicher nach Anspruch 1, **dadurch gekennzeichnet, dass** der thermische Speicher eine Speicherkapazität von ≥ 4 kWh aufweist.

## Claims

1. Thermal storage for a walk-in cold room comprising a plurality of storage cells (12a-e), in which a storage medium is accommodated, wherein a first cooling line (16) in which a first coolant can be supplied for cooling the storage medium is routed in the storage cells (12a-e), wherein the first cooling lines (16) are connected to a device (18) for selectively supplying the first coolant to the storage cells (12a-e), and a second cooling line (20) is accommodated in the storage cells (12a-e), wherein the second cooling lines (20) are connected via a further device (22), and a controller (10) is provided, by means of which the storage cells (12a-e) and the storage medium accommodated therein can be cooled by supplying the first coolant via the first cooling lines (16) and the device (18) and a second coolant can be supplied via the second cooling lines (20) and the further device (22) from at least one of the storage cells (12a-e), wherein the storage media accommodated in the storage cells (12a-e) comprise different phase change temperatures, wherein temperature measuring devices which transmit at least the temperature of the storage medium to the controller (10) are arranged in or on the individual storage cells (12a-e).

2. Thermal storage according to claim 1, wherein the storage medium is a phase change material.

3. Thermal storage according to claim 2, wherein the phase change material in the individual storage cells (12a-e) is a mixture of water and salts or alcohols, whose phase change temperature differs by the mixture composition and/or mixture concentration.

4. Thermal storage according to one of the claims 1 to 3,
wherein the first cooling line (16) is connected via the device (18) to a refrigerating machine which cools the first coolant.

5. Thermal storage according to claim 1, wherein the supply of the first coolant takes place depending upon the temperature of the storage medium in the storage cells (12a-e) and the supply of the second coolant from the storage cells (12a-e) takes place depending upon the temperature in the walk-in room to be cooled and upon the state of charge of the storage cells (12a-e).

6. Thermal storage according to claim 1, **characterized in that** the thermal storage comprises a storage capacity of ≥ 4 kWh.

## Revendications

1. Accumulateur thermique pour une chambre de refroidissement accessible, comprenant une pluralité de cellules accumulatrices (12a-e) dans lesquelles est reçu un milieu accumulateur, dans lequel une première conduite de refroidissement (16) est conduite dans les cellules accumulatrices (12a-e) dans laquelle un premier réfrigérant peut être amené pour le refroidissement du milieu accumulateur, dans lequel les premières conduites de refroidissement (16) sont reliées à un dispositif (18) destiné à l'introduction sélective du premier réfrigérant dans les cellules accumulatrices (12a-e), et une seconde conduite de refroidissement (20) est reçu dans les cellules accumulatrices (12a-e), dans lequel les secondes conduites de refroidissement (20) sont reliées par l'intermédiaire d'un autre dispositif (22), et une commande (10) est prévue, par laquelle les cellules accumulatrices (12a-e) et le milieu accumulateur reçu dans celles-ci peuvent être refroidis à force de l'introduction du premier réfrigérant par l'intermédiaire des premières conduites de refroidissement (16) et du dispositif (18) et un second réfrigérant peut être amené par les secondes conduites de refroidissement (20) et l'autre dispositif (22) à partir d'au moins une des cellules accumulatrices (12a-e), dans lequel les milieux accumulateurs reçus dans les cellules accumulatrices (12a-e) présentent des températures de changement de phase différentes, dans lequel des dispositifs de mesure de température sont agencés dans ou sur les cellules accumulatrices (12a-e) individuelles qui transmettent au moins la température du milieu accumulateur à la commande (10).

2. Accumulateur thermique selon la revendication 1, dans lequel le milieu accumulateur est un matériau à changement de phase.

3. Accumulateur thermique selon la revendication 2, dans lequel le matériau à changement de phase dans les différentes cellules accumulatrices (12a-e) est un mélange d'eau et de sels ou d'alcools dont la température de changement de phase diffère selon la composition et/ou la concentration du mélange.

4. Accumulateur thermique selon l'une quelconque des revendications 1 à 3, dans lequel la première conduite de refroidissement (16) est reliée par l'intermédiaire du dispositif (18) à une machine frigorifique qui refroidit le premier réfrigérant.

5. Accumulateur thermique selon la revendication 1, dans lequel l'introduction du premier réfrigérant s'effectue en fonction de la température du milieu accumulateur dans les cellules accumulatrices (12a-e) et l'introduction du second réfrigérant à partir des cellules
accumulatrices (12a-e) s'effectue en fonction de la température dans la chambre accessible à refroidir ainsi que de l'état de charge des cellules accumulatrices (12a-e).

6. Accumulateur thermique selon la revendication 1, **caractérisé en ce que** l'accumulateur thermique présente une capacité d'accumulation ≥ 4 kWh.
